# FASCICULE DE BREVET EUROPEEN

(11) **EP 3 176 450 B1**
(45) Date de publication et mention de la délivrance du brevet: **26.09.2018**
(21) Numéro de dépôt: 15290299.5
(22) Date de dépôt: 03.12.2015
(51) Int. Cl.: F16C 32/06, F16C 17/02, F16C 33/10

(54) **PALIER HYDROSTATIQUE À FONCTION HYDRODYNAMIQUE**
HYDROSTATISCHES LAGER MIT HYDRODYNAMISCHER FUNKTION
HYDROSTATIC BEARING WITH HYDRODYNAMIC FUNCTION

(43) Date de publication de la demande: 07.06.2017
(73) Titulaire: Flender-Graffenstaden S.A.S., 67402 Illkirch-Graffenstaden (FR)
(72) Inventeur: Gaulier, Thomas, F-67202 Wolfisheim (FR); Hamy, Pierre, F-67100 Strasbourg (FR); Jallat, Eric, F-67400 Illkirch-Graffenstaden (FR)
(74) Mandataire: Maier, Daniel Oliver

(56) Documents cités:
- EP-A2- 1 298 335
- WO-A1-98/35166
- FR-A1- 2 249 260
- GB-A- 2 062 129

## Description

La présente invention concerne un palier hydrodynamique destiné à supporter un rotor ou arbre rotatif selon le préambule de la revendication 1.

La présente invention concerne notamment les paliers hydrodynamiques capables de supporter un rotor ou arbre rotatif et d'assurer son guidage en rotation, tel qu'utilisés couramment pour le support d'arbres rotatifs grande vitesse/grande puissance (réducteur ou multiplicateur de vitesse), pour le marché de l'énergie du gaz et du pétrole. Les paliers selon l'invention conviennent notamment aux applications à forte charge radiale et à vitesses d'arbre élevées.

Un tel palier est par exemple décrit dans la demande de brevet US 2002/0018604 A1. Il est typiquement en forme de cylindre creux formé d'un ou plusieurs lobes cylindriques, la partie cylindrique intérieure dudit palier étant agencée pour accueillir un arbre rotatif, par exemple l'arbre rotatif d'un pignon d'un réducteur de vitesse, de façon à supporter et guider en rotation ledit arbre, ladite partie cylindrique intérieure comprenant en outre une surface de glissement et un dispositif d'alimentation de fluide configuré pour permettre la lubrification d'un interstice séparant la surface extérieure de l'arbre rotatif de ladite surface de glissement et la formation d'un film de lubrifiant entre la surface extérieure dudit arbre et ladite surface de glissement lorsque ledit arbre est en rotation à une vitesse de rotation supérieure à une vitesse limite définie par le dimensionnement du palier et de l'arbre, ledit lubrifiant (par exemple sa viscosité), la géométrie et les forces en présence dans le système palier-arbre.

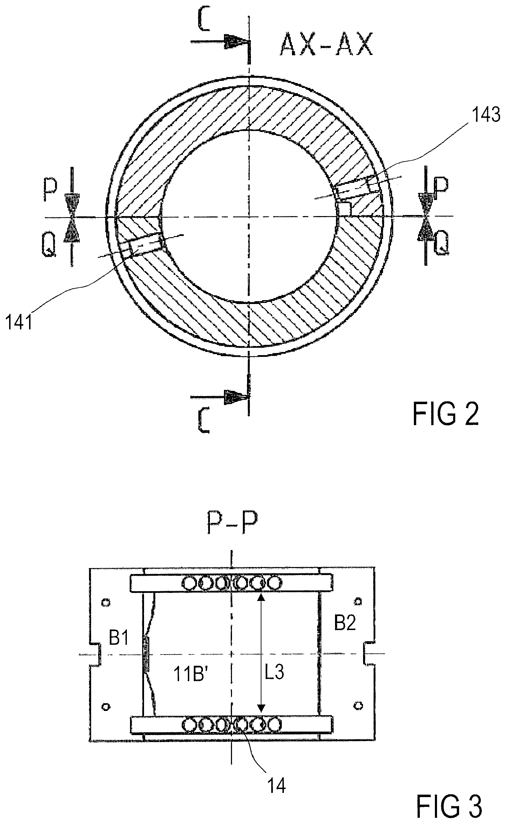

Le principe de base du palier hydrodynamique est d'avoir un film de lubrifiant intercalé entre l'arbre et la surface alésée du palier (i.e. la surface de la partie cylindrique intérieure dudit palier faisant office de surface de glissement pour ledit arbre), ledit film permettant une rotation dudit arbre libre de contact avec ladite surface alésée à partir de ladite vitesse limite. D'autres exemples de paliers sont donnés par les documents GB 2 062 129 A et EP 1 298 335 A2 est reconnu comme représentant l'état de la technique le plus pertinent et mentionne les caractéristiques suivantes de l'objet de la revendication indépendante 1, en particulier sur les figures 2 et 3B il est montré:
- un palier 1 hydrodynamique comprenant une surface interne 7 de forme annulaire agencée pour entourer un arbre rotatif, ladite surface interne 7 comprenant:
- une cavité d'évacuation 21 présentant un orifice d'alimentation 23 débouchant au fond de celle-ci,
- la cavité s'ouvrant sur une première et une deuxième rainure latérale s'étendant selon une partie de la circonférence du palier sur les côtés latéraux de la surface interne 7 du palier recevant et évacuant le lubrifiant de façon à le guider de l'amont vers l'aval en direction d'une cavité d'évacuation 4, afin qu'il soit évacué vers l'extérieur du palier.

Malheureusement, les paliers hydrodynamiques connus de l'homme du métier et convenant aux fortes charges et hautes vitesses, tel que le palier précédemment décrit, souffrent des problèmes suivants :
- une perte de puissance par friction ;
- une recirculation de lubrifiant chaud ;
- une consommation de lubrifiant excessive, engendrant, un circuit de refroidissement sur dimensionné dudit lubrifiant afin d'éviter un échauffement dudit palier en cours de travail ;
- des instabilités pour une ou plusieurs vitesses de rotation dudit arbre, notamment dues à un déséquilibre entre les matrices de raideur et d'amortissement du système palier-arbre ;
- un flux axial du lubrifiant dans une direction substantiellement alignée avec l'axe longitudinal de rotation dudit rotor, ledit flux accroissant de plus les pertes
   par jets des engrenages situés à proximité dudit palier. Un but de la présente invention est de proposer un palier hydrodynamique d'un nouveau genre qui permette de réduire la perte de puissance par friction, la consommation de lubrifiant, les instabilités et ledit flux de lubrifiant, notamment axial, et de réduire les pertes par jets des engrenages.

A cette fin, un palier hydrodynamique est décrit au travers des caractéristiques de la revendication 1.

Un ensemble de sous-revendications présente également des modes avantageux de réalisation dudit palier selon l'invention.

La présente invention concerne ainsi notamment un palier hydrodynamique comprenant une surface interne de forme annulaire, ou autrement dit cylindrique, ayant une largeur L0, agencée pour entourer un arbre rotatif afin de supporter ce dernier et le guider en rotation autour de son axe longitudinal de rotation selon un sens de rotation w d'« amont » vers « aval », ladite surface interne comprenant :
- un orifice d'alimentation en lubrifiant pour alimenter en lubrifiant la surface interne dudit palier, ledit orifice d'alimentation étant préférentiellement centré par rapport à la largeur L0 de ladite surface interne, ledit orifice d'alimentation se terminant en direction de ladite surface interne par une ouverture, cette dernière étant préférentiellement de forme longiligne de longueur L1<L0 s'étendant longitudinalement selon une direction parallèle audit axe longitudinal de rotation, ladite ouverture étant bordée à une de ses extrémités selon la largeur dudit palier par une première cavité d'évacuation et à l'autre extrémité selon ladite largeur par une seconde cavité d'évacuation, l'ouverture dudit orifice d'alimentation vers ladite surface interne étant en particulier situé à la base d'un « V » symétrique pointant en sens inverse audit sens de rotation w et dont chacun des bras s'étend préférentiellement symétriquement depuis ladite ouverture vers l'aval (i.e. selon ledit sens de rotation w) en direction d'un des côtés latéraux de ladite surface interne de façon à limiter en amont respectivement ladite première cavité d'évacuation et ladite seconde cavité d'évacuation ;
- ladite première et seconde cavité d'évacuation, chacune configurée pour récupérer du lubrifiant en mouvement d'amont vers aval lors de la rotation dudit arbre et pour le diriger ou guider vers respectivement une première rainure latérale et une seconde rainure latérale, lesdites rainures latérales étant configurées pour empêcher un flux axial de lubrifiant hors du palier et étant capable de collecter un flux axial quittant ladite surface interne et de le diriger pour qu'il soit évacué radialement. La première cavité d'évacuation est par exemple configurée pour diriger ledit lubrifiant le long d'un des bras dudit « V » vers la première rainure latérale de collecte de lubrifiant, et ladite seconde cavité d'évacuation est configurée pour diriger ledit lubrifiant le long de l'autre des bras dudit « V » vers la seconde rainure latérale de collecte de lubrifiant. Ladite première cavité d'évacuation et ladite seconde cavité d'évacuation selon l'invention décrivent ainsi chacune un chemin creusé dans le corps du palier, ouvert en direction respectivement de la première rainure latérale et de la seconde rainure latérale, également ouvert radialement en direction dudit axe longitudinal de rotation de façon à ce que le lubrifiant entrainé en rotation selon le sens de rotation w « tombe » dans ledit chemin créé par ladite première et seconde cavité d'évacuation, et soit dirigé depuis la partie de la première cavité d'évacuation jouxtant ladite ouverture dudit orifice vers l'aval en direction de la première rainure latérale, et depuis la partie de la seconde cavité d'évacuation jouxtant ladite ouverture dudit orifice vers l'aval en direction de la seconde rainure latérale. Ledit orifice d'alimentation en lubrifiant selon l'invention est ainsi en particulier bordé de chaque côté selon la largeur de ladite surface interne, par exemple à chacune des extrémités longitudinales de son ouverture au niveau de la surface interne, par une cavité d'évacuation, respectivement la première et seconde cavité d'évacuation, permettant de récupérer au moins une partie du lubrifiant arrivant depuis l'amont par rapport audit orifice d'alimentation et/ou auxdites cavités d'évacuation afin de le guider d'amont vers aval et de l'évacuer latéralement via respectivement la première rainure latérale et la seconde rainure latérale. Ladite première cavité d'évacuation est préférentiellement disposée d'un côté de ladite ouverture dudit orifice et ladite seconde cavité d'évacuation disposée de l'autre côté de ladite ouverture selon ladite largeur de la surface interne, chaque cavité d'évacuation ayant par exemple un côté parallèle à un côté latéral de ladite surface interne, et un autre côté perpendiculaire audit côté latéral, i.e. parallèle audit axe longitudinal de rotation, lesdites cavités de récupération étant en particulier disposées symétriquement par rapport à ladite ouverture dudit orifice. Préférentiellement, la largeur de la première et seconde cavité d'évacuation mesurée depuis ledit côté parallèle, i.e. la largeur selon une direction parallèle audit axe longitudinal, décroît dans le sens de rotation w, i.e. d'amont vers l'aval, et la profondeur de chacune desdites cavités d'évacuation croît dans ledit sens de rotation w. En d'autres termes, la profondeur dudit chemin créé par chacune desdites cavités d'évacuation augmente de son extrémité amont vers son extrémité aval. En particulier, la profondeur desdites cavités d'évacuation lorsqu'elles s'ouvrent sur leurs rainures latérales respectives, par exemple à chacune des extrémités des bras dudit « V », est inférieure ou égale à la profondeur desdites rainures latérales de collecte de lubrifiant. En effet, et en particulier, ledit côté parallèle de chacune desdites cavités d'évacuation s'ouvre sur une desdites rainures latérales, le côté parallèle de ladite première cavité d'évacuation s'ouvrant ainsi sur la première rainure latérale et le côté parallèle de ladite seconde cavité d'évacuation s'ouvrant sur la seconde rainure latérale. Avantageusement, lesdites cavités d'évacuation entourant ladite ouverture dudit orifice d'alimentation en lubrifiant permettent de stabiliser l'arbre lors de sa rotation à hautes vitesses et de diriger le lubrifiant en direction desdites rainures latérales, réduisant ou supprimant ainsi un flux axial de lubrifiant hors dudit palier, ledit lubrifiant étant obligé de suivre le chemin défini par lesdites première et seconde cavité d'évacuation, puis lesdites première et seconde rainures latérales. Ainsi, selon la présente invention, le flux axial sortant du coussinet est évité par captage du lubrifiant ne servant plus à la formation du film hydrodynamique au moyen desdites cavités d'évacuation et en dirigeant ce dernier depuis lesdites cavités vers leur rainure latérale respective ;
- ladite première rainure latérale et ladite seconde rainure latérale, chacune desdites rainures latérales bordant un des côtés latéraux de ladite surface interne de façon à ce que la première rainure latérale soit apte à collecter le lubrifiant récupéré par ladite première cavité d'évacuation et la seconde rainure latérale soit apte à collecter le lubrifiant récupéré par ladite seconde cavité d'évacuation. Préférentiellement, chacune des rainures a une forme d'arc de cercle creusé dans ledit palier et s'étendant le long des bords internes latéraux dudit palier sur une partie de la circonférence interne dudit palier, par exemple 180°. En particulier, la première rainure latérale relie ladite première cavité d'évacuation à une troisième cavité d'évacuation située en aval par rapport à ladite première cavité d'évacuation, et ladite seconde rainure latérale relie ladite seconde cavité d'évacuation à ladite troisième cavité d'évacuation. Préférentiellement, ladite première rainure et ladite seconde rainure comprennent chacune au moins une ouverture radiale, par exemple un perçage radial, configuré pour être disposé sous ledit arbre lorsque ledit palier est monté autour dudit arbre, et destiné à évacuer le lubrifiant collecté dans la rainure radialement vers l'extérieur dudit palier, par exemple vers un système de circulation dudit lubrifiant ;
- ladite troisième cavité d'évacuation, par exemple de forme longiligne, préférentiellement connectée auxdites rainures latérales, et comprenant également et notamment un ou plusieurs perçages radiaux destinés à évacuer vers l'extérieur dudit palier ledit lubrifiant collecté dans lesdites rainures ;
- ladite surface interne comprenant en outre, en aval de ladite troisième cavité d'évacuation, un autre orifice d'alimentation en lubrifiant, ledit autre orifice étant préférentiellement centré par rapport à la largeur de ladite surface interne, et s'ouvrant en direction de ladite surface interne au moyen d'une ouverture, par exemple de forme longiligne de longueur L2>L1 et s'étendant longitudinalement selon une direction parallèle audit axe longitudinal de rotation, ladite surface interne étant lisse et libre de cavités entre ledit autre orifice d'alimentation en lubrifiant et lesdites premières et secondes cavités d'évacuation de lubrifiant.

Des avantages dudit palier selon l'invention et des exemples de réalisation et d'application sont fournis à l'aide des figures suivantes :
- Figures 1A-1D: Vue 3D d'un mode de réalisation préféré d'un palier hydrodynamique selon l'invention.
- Figure 2: Coupe transversale médiane AX-AX du palier selon figure 1.
- Figure 3: Coupe selon le plan P-P du palier selon figure 2.
- Figure 4: Coupe selon le plan C-C du palier selon figure 2.
- Figure 5: Coupe selon le plan Q-Q du palier selon figure 2.
- Figure 6: Coupe selon le plan B-B du palier selon figure 2.
- Figure 7: Coupe selon le plan D-D du palier selon figure 6.
- Figures 8-10: Différentes vues d'autres modes de réalisation d'un palier selon l'invention.

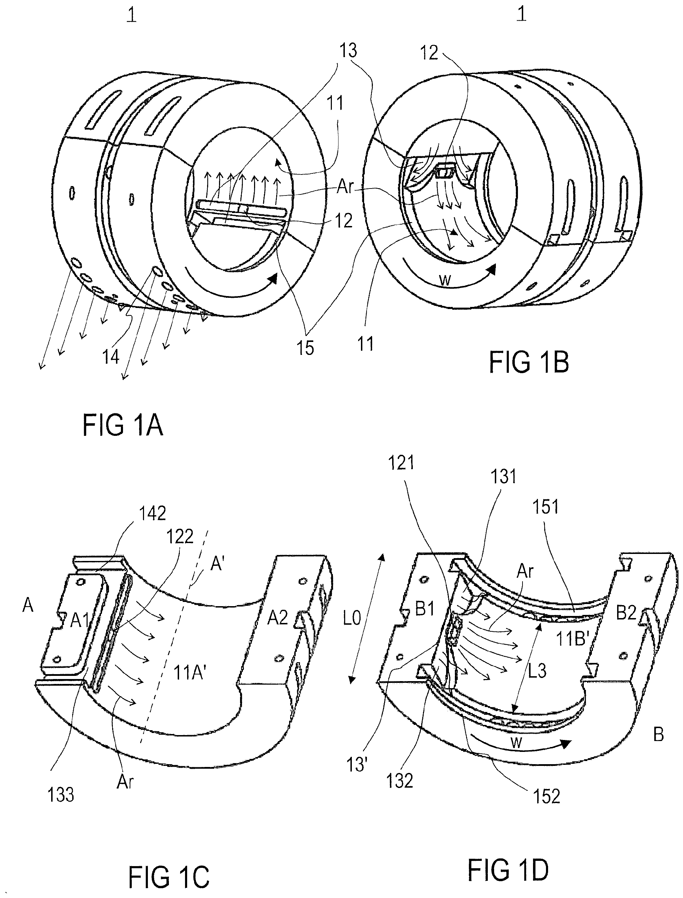

La figure 1 montre une représentation schématique tridimensionnelle (3D) d'un mode de réalisation préférentiel d'un palier 1 hydrodynamique selon l'invention. Les figures 1A et 1B montrent des vues latérales dudit palier 1. Ce dernier comprend un corps annulaire autour d'une direction axiale représentée par l'axe A'(cf. Fig. 1C), ou autrement dit le corps dudit palier 1 est en forme de cylindre creux, agencé pour entourer un arbre rotatif (non représenté) comprenant un axe longitudinal de rotation destiné à être disposé selon ladite direction axiale au centre dudit corps annulaire. En particulier, ledit axe longitudinal de rotation et ledit axe A' ont sensiblement la même direction. Ledit palier 1 est fixe en rotation et est configuré pour faciliter une rotation dudit arbre selon le sens de rotation w tel qu'indiqué par les flèches correspondantes aux figures 1A et 1B. Le sens de rotation w est orienté d'amont vers aval.

Ledit corps annulaire comprend une surface interne 11 qui sert de guide et de support pour ledit arbre rotatif lors de sa rotation dans le sens de rotation w. Ladite surface interne correspond à la surface cylindrique située à l'intérieur dudit palier et sert notamment de surface de glissement pour ledit arbre. Cette surface interne 11 est alésée de façon à comprendre des orifices d'alimentation 12 en lubrifiant, des cavités 13 d'évacuation, des ouvertures ou perçages radiaux 14, des rainures latérales 15 ainsi qu'il sera expliqué plus tard. Les directions suivies par le lubrifiant sur la surface interne 11 dudit palier sont schématiquement représentées par les flèches Ar aux figures 1A-1D.

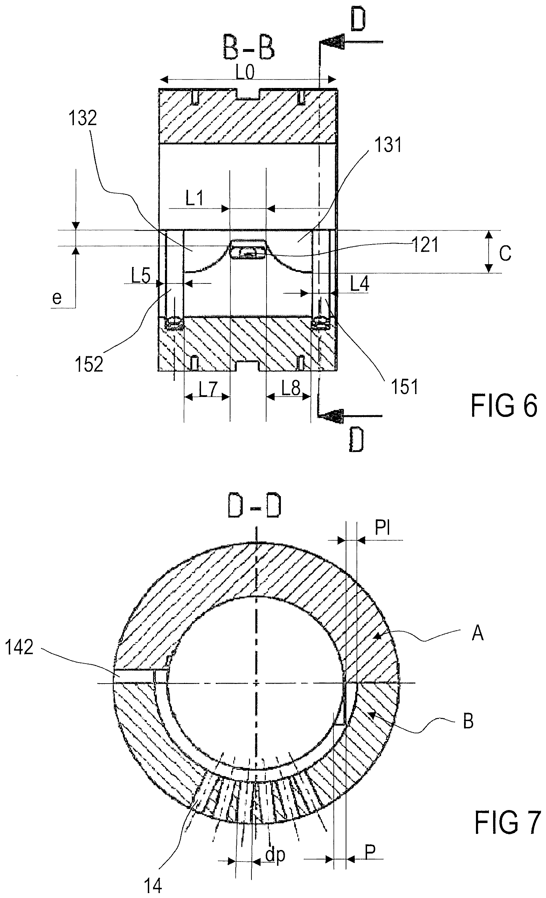

En particulier, et comme illustré en figure 1C et 1D, ledit palier est préférentiellement constitué de deux parties ou lobes en forme de demi-cylindre creux, respectivement un lobe dit « lobe actif A », et un lobe dit « lobe passif B », qui sont configurés pour être assemblés, par exemple s'emboiter, l'un avec l'autre afin de former ledit palier 1. Ledit lobe actif A et ledit lobe passif B sont respectivement configurés pour être positionnés au-dessus et au-dessous (cf. Fig. 7) dudit arbre lorsque ledit palier 1 entoure ce dernier. De manière générale, ledit palier selon l'invention comprend au moins un lobe actif et un ou plusieurs lobes passifs. Le lobe actif, tel que défini dans le domaine des paliers, est notamment la portion cylindrique du palier qui reprend la plus grande charge ou effort généré lors la rotation dudit arbre lorsque le palier supporte ledit arbre et que ce dernier est en rotation.

La surface interne du lobe actif A dudit palier est configurée pour supporter les efforts, notamment verticaux et dirigés vers le haut, transmis par l'arbre lors de sa rotation. La surface interne du lobe passif B est notamment configurée pour collecter latéralement le lubrifiant dans les rainures latérales 15 et les évacuer par gravité ou pompage via les ouvertures radiales 14. La surface interne selon l'invention est en particulier de largeur L3 inférieure à la largeur L0 dudit palier de manière à réduire des forces de trainée du palier. Préférentiellement, la première rainure latérale 151 et la seconde rainure latérale 152 sont respectivement caractérisées par une largeur L4 et L5, par exemple L4 = L5, calculée de manière à créer une résistance minimum au flux de lubrifiant tout en permettant une orientation dudit flux radialement afin d'évacuer le lubrifiant hors dudit palier.

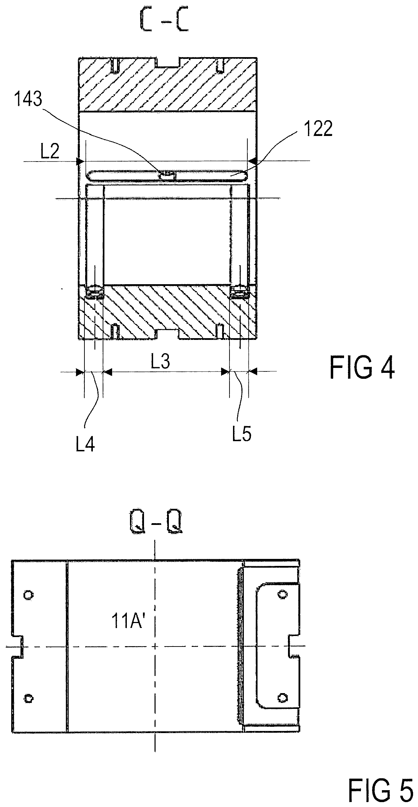

En parcourant ladite surface interne 11 dudit palier 1 selon sa circonférence dans le sens de rotation w, notamment en débutant ledit parcours à l'extrémité B1 (voir Fig. 1D et FIG3) dudit lobe passif et en suivant ladite surface interne en direction de l'extrémité B2 (voir Fig. 1D ou Fig. 3), ladite surface interne 1 comprend, et donc en particulier la surface interne dudit lobe passif B comprend:
- un orifice 121 d'alimentation en lubrifiant (voir également Fig. 6), centré par rapport à la largeur L0 dudit palier et s'ouvrant au niveau de ladite surface interne 11 au moyen d'une ouverture de longueur L1 selon la largeur dudit palier inférieure à L3, ledit orifice 121 permettant d'approvisionner la surface interne dudit palier en lubrifiant via un canal 141 traversant ledit palier 1 de l'extérieur vers l'intérieur tel qu'illustré en Fig. 2, ledit canal 141 débouchant notamment sur ladite ouverture préférentiellement de forme rectiligne et longiligne, ladite ouverture étant disposée selon la largeur L0 dudit palier. Préférentiellement, un espace e (voir Fig. 6) sépare ladite ouverture dudit orifice 121 de l'extrémité B1 dudit lobe passif B. Cet espace e est en particulier minimisé afin de limiter la circulation de lubrifiant du lobe actif vers le lobe non actif, e prenant des valeurs typiquement comprises entre 2 mm et 10 mm pour un palier de 200 mm de diamètre intérieur. Les exemples de dimensions apparaissant dans la suite du document sont donnés pour ledit palier de 200 mm de diamètre intérieur.
- une première cavité d'évacuation 131 et une seconde cavité d'évacuation 132 bordent de part et d'autre selon la largeur dudit palier 1 ladite ouverture dudit orifice 121. Lesdites cavités d'évacuation 131 et 132 peuvent être reliées par une dépression longitudinale située en amont de l'orifice 121, dans ledit espace e séparant ladite ouverture dudit orifice 121 de l'extrémité B1 dudit lobe passif B. En particulier, la profondeur P desdites cavités 131 et 132 croît lorsqu'on s'éloigne de l'extrémité B1, i.e. croît d'amont vers aval jusqu'à avoir une profondeur inférieure ou identique aux rainures latérales 15. Préférentiellement, la première cavité d'évacuation 131 et la seconde cavité d'évacuation 132 ont un côté parallèle à un côté latéral de la surface interne 11, ledit côté parallèle ayant une longueur C calculée de manière à favoriser les écoulements dans les rainures latérales 151 et 152 sans réduire exagérément la longueur développée du lobe non actif B. Typiquement C prend des valeurs comprises entre 40 mm et 50 mm. En particulier, la première cavité d'évacuation 131 et la seconde cavité d'évacuation 132 ont une profondeur P à l'extrémité B1, par exemple P = 0 mm, et croissant, par exemple linéairement, jusqu'à être inférieure ou égale à la profondeur Pl des rainures latérales 151 et 152, ou autrement dit le segment de droite 13' représenté en Fig. 1D est au même niveau ou en retrait (i.e. à la même distance radiale de l'axe longitudinal de rotation ou à une distance radiale supérieure) par rapport aux surfaces 11A' du lobe actif A ou 11B' du lobe passif B. La première cavité d'évacuation 131 et la seconde cavité d'évacuation 132 sont préférentiellement réparties symétriquement de part et d'autre de l'ouverture dudit orifice 121 d'alimentation en lubrifiant de manière à ce que la largeur L6 de la première cavité d'évacuation 131 au niveau de ladite ouverture dudit orifice 121 égale la largeur L7 de la seconde cavité d'évacuation 132 au niveau de ladite ouverture dudit orifice 121, avec L6 > à L1. La première cavité d'évacuation 131 s'étend notamment depuis une extrémité longitudinale de l'ouverture dudit orifice 121 en direction de la rainure latérale la plus proche, appelée « première rainure latérale 151 », s'ouvrant sur ladite première rainure latérale 151, et respectivement la seconde cavité d'évacuation 132 s'étend depuis l'autre extrémité longitudinale de l'ouverture dudit orifice 121 vers la rainure latérale la plus proche, appelée « seconde rainure latérale 152 », s'ouvrant sur ladite seconde rainure latérale 152, chacune en décrivant un biais en direction de l'aval depuis les extrémités longitudinales respectives de l'ouverture dudit orifice 121 et par rapport à ladite direction axiale, afin de diriger le lubrifiant arrivant de l'amont en direction respectivement de la première rainure latérale 151 et de la seconde rainure latérale 152, de part et d'autre de ladite ouverture. En d'autres termes, la première cavité d'évacuation 151 et la seconde cavité d'évacuation 152 sont aptes à récupérer le lubrifiant arrivant de l'amont et se dirigeant vers l'aval, de façon à le diriger latéralement dans leurs rainures latérales respectives ;
- la première rainure latérale 151 et la seconde rainure latérale 152, s'étendant vers l'aval, depuis respectivement ladite première cavité d'évacuation 131 et ladite seconde cavité d'évacuation, vers une troisième cavité d'évacuation 133, lesdites rainures latérales étant configurées pour collecter respectivement le lubrifiant arrivant dans ladite première cavité d'évacuation 131 et ladite seconde cavité d'évacuation, afin de le diriger vers l'extérieur dudit palier, soit au travers d'ouvertures radiales, par exemples des perçages radiaux 14 (cf. Fig. 7) de diamètre dp et de nombre n agencés pour être répartis sous l'arbre lorsque le palier entoure ce dernier, avec typiquement dp = 12 à 20 mm et n = 2 à 6, soit via ladite troisième cavité d'évacuation 133 située en aval et comprenant un ou plusieurs canaux d'évacuation 142 (voir Fig. 2, 5, 7) destinés à évacuer ledit lubrifiant de l'intérieur dudit palier vers l'extérieur, les dimensions d'un desdits canal étant typiquement 10 à 15 mm (diamètre pour un canal de section circulaire) ou 45 à 70 mm x 10 à 15 mm (longueur x largeur pour un canal de section rectangulaire). Ainsi qu'illustré en Fig. 1C et 1D, les rainures latérales 15 sont agencées chacune latéralement sur une partie de la circonférence interne dudit palier. Préférentiellement, la première rainure latérale 151 et la seconde rainure latérale 152 s'étendent de l'extrémité B1 à l'extrémité B2 dudit lobe passif B et ont par exemple une section rectangulaire. En particulier, ledit lobe actif A comprend à une de ses extrémités A1, destinée à s'emboîter ou être fixée avec l'extrémité B2, ladite troisième cavité d'évacuation 133 et le ou les canaux d'évacuation 142;
- ladite troisième cavité d'évacuation 133 s'étend préférentiellement longitudinalement de la première rainure 151 à la seconde rainure 152, sa longueur totale selon la largeur dudit palier étant égale à L3 + L4 + L5, et comprend lesdits un ou plusieurs canaux d'évacuation 142 notamment configurés pour évacuer radialement ledit lubrifiant vers l'extérieur dudit palier. Ladite troisième cavité d'évacuation 133 est en particulier longiligne, et préférentiellement de la même longueur que, ou d'une longueur supérieure à, un autre orifice 122 d'alimentation en lubrifiant ;
- ledit autre orifice 122 d'alimentation en lubrifiant est disposé directement en aval de ladite troisième cavité d'évacuation 133, et s'ouvre au niveau de la surface interne 11 par une ouverture de forme préférentiellement longiligne s'étendant longitudinalement selon la largeur dudit palier, la longueur L2 de ladite ouverture étant supérieure à la longueur L1 de l'ouverture de l'orifice 121, ladite longueur L2 étant par exemple égale à la distance séparant le côté latéral de la première rainure 151 qui est le plus éloigné de la seconde rainure 152 du côté latéral de la seconde rainure 152 qui est le plus éloigné de la première rainure 151, cette distance étant par exemple égale à la longueur de ladite troisième cavité d'évacuation 133. Ledit autre orifice 122 comprend en outre un canal d'alimentation 143 configuré pour permettre une entrée de lubrifiant depuis l'extérieur dudit palier vers l'intérieur, de façon à lubrifier ladite surface interne dudit palier. Préférentiellement, ladite surface interne est libre de cavités entre ledit autre orifice 122 et lesdites première et seconde cavités d'évacuation 131, 132, i.e. entre ledit autre orifice 122 et l'extrémité B1 du lobe passif B. Ainsi, selon la présente invention, le lobe actif A comprend en particulier ladite troisième cavité d'évacuation 133 avec son ou ses canaux d'évacuations 142 agencée à l'extrémité A1 dudit lobe actif, puis, en aval, ledit autre orifice 122, accolé à ladite troisième cavité d'évacuation 133 en ménageant préférentiellement un espace longitudinal E entre ladite troisième cavité d'évacuation 133 et ledit autre orifice 122, puis toujours en aval depuis ledit autre orifice 122 jusqu'à l'autre extrémité A2 dudit lobe actif A, la surface interne 11A' libre de toute cavité sur toute la largeur dudit palier, ladite autre extrémité A2 étant configurée pour être fixée et/ou s'emboiter à l'extrémité B1 dudit lobe passif B.

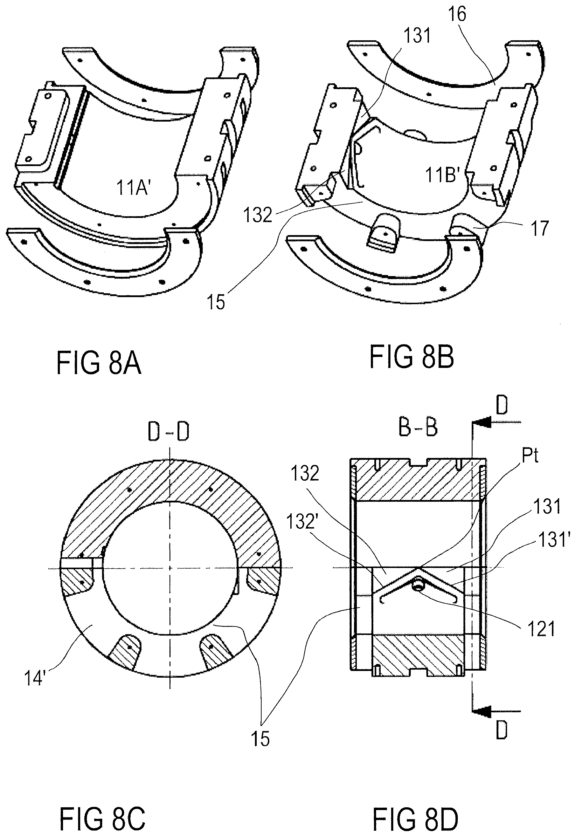

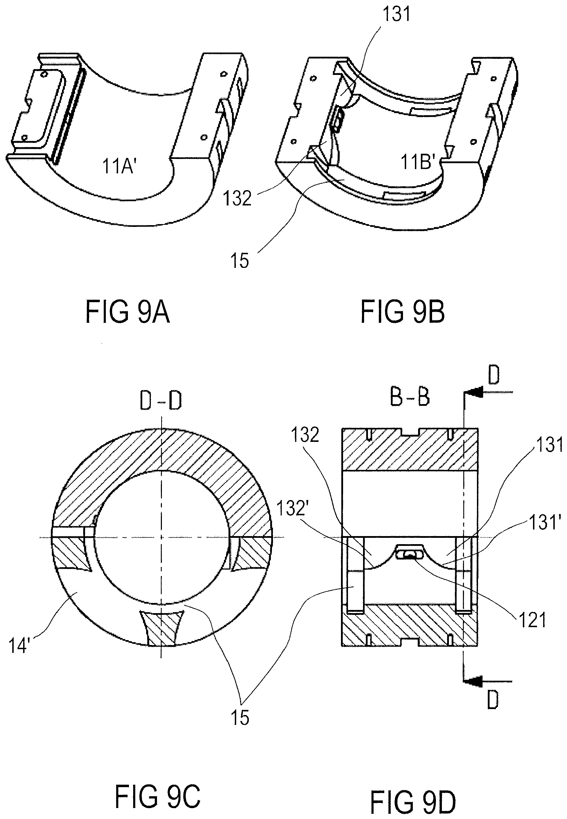

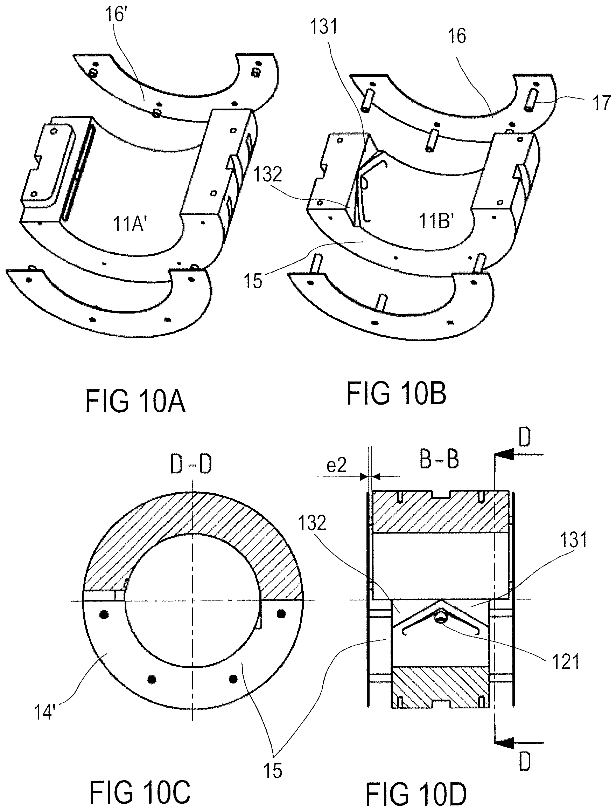

Les figures 8-10 présentent des variations constructives du palier selon l'invention, les figures 8A-8D représentant un palier selon un premier mode de réalisation selon l'invention, les figures 9A-9D un palier selon un second mode de réalisation de l'invention, et les figures 10A-10D un palier selon un troisième mode de réalisation. De manière générale, un palier selon l'invention peut mélanger des caractéristiques des quatre différents paliers représentés par les figures 1, 8, 9 et 10.

En particulier, les rainures latérales 15 peuvent être réalisées de différentes façons tel qu'illustré en figures 8-10. Un premier mode de réalisation tel que précédemment décrit consiste en effet à creuser lesdites rainures latérales dans le corps dudit palier de largeur L0 tel que représenté en Fig. 1D, 9B, 9C, 9D. Cependant, lesdites rainures latérales peuvent également être créées en fixant sur chaque côté latéral dudit lobe passif B dudit palier, parallèlement aux côtés latéraux dudit lobe passif B, respectivement à une distance L4 d'un côté latéral du lobe passif B afin de former la rainure latérale 151 et à une distance L5 de l'autre côté latéral du lobe passif B afin de former la rainure latérale 152, une plaque 16 de la forme d'un secteur d'une couronne circulaire dont le diamètre interne est égal à la distance radiale séparant la surface interne 11 (par exemple 11A' ou 11B') dudit axe A' (i.e. est égal au diamètre interne dudit palier) et le diamètre externe est substantiellement égal au diamètre externe dudit palier. Dans ce cas, le lobe passif B est de largeur L3, et la largeur L0 du palier est donnée par L0 = L3 + L4 + L5 + 2·e1, où e1 est l'épaisseur de chacune desdites plaques de la forme d'un secteur de couronne circulaire. En particulier, un espace dégagé entre des moyens de fixation 17 utilisés pour fixer lesdites plaques aux côtés latéraux du lobe passif permet un écoulement radial du lubrifiant et peut ainsi faire office ou remplacer lesdits perçages radiaux 14. Optionnellement, de telles plaques peuvent également être fixées à chaque côté latéral du lobe actif A en maintenant une distance de séparation e2 (cf. Fig. 10D) entre les côtés latéraux du lobe actif et chacune desdites plaques afin de récupérer un flux axial de lubrifiant quittant la surface interne 11A' dudit lobe actif. Les plaques destinées à équiper le lobe actif dudit palier sont notamment représentées en Fig. 10A et indiquées par la référence 16'. Dans ce cas et en particulier, la distance de séparation e2 séparant la plaque du côté latéral du lobe actif sera inférieure à L4 ou L5.

Les perçages radiaux 14 peuvent en particulier être des ouvertures radiales 14' alésées dans le corps dudit palier et permettant une communication de chaque rainure latérale avec l'extérieur dudit palier (cf. Fig. 9C) ou formées par la fixation desdites plaques 16 aux côtés latéraux dudit lobe actif tel qu'illustré en Fig. 8C et 10C. Lesdites ouvertures 14' peuvent être de tailles et de formes diverses afin d'évacuer efficacement le lubrifiant récupéré dans lesdites rainures latérales vers l'extérieur dudit palier, ainsi qu'illustré aux figures 8-10.

La configuration géométrique des cavités d'évacuation 131, 132 et de l'orifice 121 d'alimentation peut également être réalisée de différentes façons. Par exemple, lesdites cavités d'évacuation 131 et 132 comprennent respectivement une arrête de guidage 131' et 132' qui est rectiligne (voir Fig. 8D) ou courbe (voir Fig. 9D), ladite arrête de guidage 131', 132' reliant en particulier l'extrémité avale du côté parallèle de la cavité à une extrémité substantiellement centrale (par rapport à la largeur du palier) de son côté perpendiculaire. Préférentiellement, si les cavités d'évacuation 131, 132 comprennent chacune une arrête de guidage 131', 132' rectiligne, ces dernières se joignent en un point Pt au milieu de la largeur du palier afin de former un « V » renversé (voir Fig. 8D), l'orifice 121 d'alimentation se trouvant à la base dudit « V » formé par les arrêtes, plus précisément aligné avec ledit point Pt et en aval de ce dernier.

En conclusion, la présente invention propose un palier hydrodynamique d'un nouveau genre comprenant des cavités d'évacuations 131, 132 coopérant avec un orifice 121 d'alimentation, lesdites cavités d'évacuations étant configurées pour dévier un flux de lubrifiant en direction de rainures ou gorges latérales 15 de façon à ce que le lubrifiant chauffé durant le travail dudit arbre par rotation soit guidé par lesdites cavités, puis par lesdites rainures latérales afin d'être évacué hors dudit palier, tout en permettant un apport du lubrifiant frais via ledit orifice 121 d'alimentation.

## Revendications

1. Palier (1) hydrodynamique comprenant une surface interne (11) de forme annulaire agencée pour entourer un arbre rotatif afin de supporter ce dernier et le guider en rotation autour de son axe longitudinal de rotation selon un sens de rotation w d'« amont » vers « aval », ladite surface interne (11) comprenant :
- un orifice (121) d'alimentation en lubrifiant;
- une première cavité d'évacuation (131) et une seconde cavité d'évacuation (132), réparties de part et d'autre dudit orifice (121) d'alimentation (121) selon la largeur dudit palier (1), la première cavité d'évacuation (131) s'ouvrant sur une première rainure latérale (151) et la seconde cavité d'évacuation (132) s'ouvrant sur une seconde rainure latérale (152) de façon à guider ledit lubrifiant de l'amont vers l'aval en direction respectivement de ladite première rainure latérale et ladite seconde rainure latérale afin de le diriger vers l'extérieur dudit palier;
- ladite première rainure latérale (151) et ladite seconde rainure latérale (152) s'étendant selon une partie de la circonférence dudit palier sur les côtés latéraux de la surface interne dudit palier (1) respectivement de la dite première cavité d'évacuation (131) et de ladite seconde cavité d'évacuation (132) vers une troisième cavité d'évacuation (133) située en aval, de façon à diriger le lubrifiant collecté par lesdites première et seconde cavité d'évacuation en direction de ladite troisième cavité d'évacuation (133) afin qu'il soit évacué vers l'extérieur dudit palier (1).

2. Palier (1) selon revendication 1, pour lequel la première rainure latérale (151) et la seconde rainure latérale (152) comprennent chacune une ou plusieurs ouvertures radiales (14) configurées pour évacuer radialement ledit lubrifiant depuis l'intérieur de ladite première et seconde rainure latérale vers l'extérieur dudit palier (1).

3. Palier (1) selon la revendication 1 ou 2, pour lequel ladite première cavité d'évacuation (131) et ladite seconde cavité d'évacuation (132) ont une profondeur croissante d'amont vers aval.

4. Palier (1) selon la revendication 3, **caractérisé en ce que** ladite profondeur est croissante d'amont vers aval, partant en amont du niveau de la surface interne (11) et croissant en aval jusqu'à une profondeur inférieure ou égale à la profondeur desdites première ou seconde rainures latérales (151, 152).

5. Palier (1) selon une des revendications 1 à 4, pour lequel la première cavité d'évacuation (131) et la seconde cavité d'évacuation (132) sont configurées pour récupérer le lubrifiant entrainé en mouvement d'amont vers l'aval par la rotation dudit arbre, et diriger ledit lubrifiant récupéré latéralement vers l'aval en direction respectivement de la première rainure latérale (151) et de la seconde rainure latérale (152).

6. Palier (1) selon une des revendications 1 à 5, pour lequel la troisième cavité d'évacuation (133) comprend un ou plusieurs canaux d'évacuation (142) capable d'évacuer radialement vers l'extérieur dudit palier le lubrifiant collecté par lesdites rainures latérales (151, 152).

7. Palier (1) selon une des revendications 1 à 6, comprenant un autre orifice (122) d'alimentation en lubrifiant situé en aval de ladite troisième cavité d'évacuation (133) .

8. Palier (1) selon une des revendications 1 à 7, **caractérisé en ce qu'**il est formé de deux parties, respectivement un lobe actif (A) et un lobe passif (B), chacun en forme de demi-cylindre creux, configurés pour être fixés l'un à l'autre afin de former ledit palier (1).

9. Palier (1) selon revendication 8, pour lequel le lobe passif (A) comprend à une de ses extrémités (B1) lesdites première et seconde cavités d'évacuation (131, 132) et ledit orifice (121) d'alimentation en lubrifiant, lesdites rainures latérales s'étendant chacune latéralement de ladite extrémité (B1) à l'autre extrémité (B2) dudit lobe passif (B) le long de la circonférence interne dudit lobe passif (B).

10. Palier (1) selon une des revendications 8 ou 9, pour lequel le lobe actif (A) comprend à une de ses extrémités (A1) destinée à être fixée à l'autre extrémité (B2) du lobe passif (B) ladite troisième cavité d'évacuation (133) .

11. Palier (1) selon une des revendications 1 à 10, pour lequel ladite troisième cavité d'évacuation (133) jouxte ledit autre orifice (122) d'alimentation en lubrifiant.

12. Palier (1) selon une des revendications 1 à 11, pour lequel la surface interne (11) dudit palier (1) entre ledit autre orifice (122) d'alimentation en lubrifiant et lesdites premières et seconde cavités d'évacuations (131, 132) est lisse et libre de toute cavité.

## Patentansprüche

1. Hydrodynamisches Lager (1), welches eine ringförmige Innenfläche (11) umfasst, die dafür ausgebildet ist, eine drehbare Welle zu umgeben, um diese Letztere abzustützen und sie um ihre Längsdrehachse drehbar in einer Drehrichtung w von "stromaufwärts" nach "stromabwärts" zu führen, wobei die Innenfläche (11) umfasst:
- eine Öffnung (121) zur Versorgung mit Schmiermittel;
- einen ersten Ablasshohlraum (131) und einen zweiten Ablasshohlraum (132), die beiderseits der Versorgungsöffnung (121) in Richtung der Breite des Lagers (1) verteilt sind, wobei der erste Ablasshohlraum (131) sich zu einer ersten seitlichen Nut (151) öffnet und der zweite Ablasshohlraum (132) sich zu einer zweiten seitlichen Nut (152) öffnet, so dass das Schmiermittel in Stromaufwärts-Stromabwärts-Richtung in Richtung der ersten seitlichen Nut bzw. der zweiten seitlichen Nut geführt wird, um es zur Außenseite des Lagers hin zu lenken;
- wobei sich die erste seitliche Nut (151) und die zweite seitliche Nut (152) entlang eines Teils des Umfangs des Lagers auf den lateralen Seiten der Innenfläche des Lagers (1) von dem ersten Ablasshohlraum (131) bzw. dem zweiten Ablasshohlraum (132) zu einem dritten Ablasshohlraum (133) hin erstrecken, der stromabwärts angeordnet ist, so dass das von dem ersten und dem zweiten Ablasshohlraum gesammelte Schmiermittel in Richtung des dritten Ablasshohlraums (133) gelenkt wird, damit es zur Außenseite des Lagers (1) hin abgelassen wird.

2. Lager (1) nach Anspruch 1, wobei die erste seitliche Nut (151) und die zweite seitliche Nut (152) jeweils eine oder mehrere radiale Öffnungen (14) umfassen, die dafür ausgebildet sind, das Schmiermittel radial aus dem Inneren der ersten und der zweiten seitlichen Nut zur Außenseite des Lagers (1) hin abzulassen.

3. Lager (1) nach Anspruch 1 oder 2, wobei der erste Ablasshohlraum (131) und der zweite Ablasshohlraum (132) eine Tiefe aufweisen, die in Stromaufwärts-Stromabwärts-Richtung zunimmt.

4. Lager (1) nach Anspruch 3, **dadurch gekennzeichnet, dass** die Tiefe in Stromaufwärts-Stromabwärts-Richtung zunehmend ist, beginnend stromaufwärts auf dem Niveau der Innenfläche (11) und stromabwärts zunehmend bis zu einer Tiefe, die kleiner oder gleich der Tiefe der ersten oder zweiten seitlichen Nut (151, 152) ist.

5. Lager (1) nach einem der Ansprüche 1 bis 4, wobei der erste Ablasshohlraum (131) und der zweite Ablasshohlraum (132) dafür ausgebildet sind, das Schmiermittel zurückzugewinnen, das durch die Rotation der Welle in Stromaufwärts-Stromabwärts-Richtung in Bewegung gesetzt wird, und das zurückgewonnene Schmiermittel seitlich stromabwärts in Richtung der ersten seitlichen Nut (151) bzw. der zweiten seitlichen Nut (152) zu lenken.

6. Lager (1) nach einem der Ansprüche 1 bis 5, wobei der dritte Ablasshohlraum (133) einen oder mehrere Ablasskanäle (142) umfasst, die in der Lage sind, das von den seitlichen Nuten (151, 152) gesammelte Schmiermittel radial zur Außenseite des Lagers hin abzulassen.

7. Lager (1) nach einem der Ansprüche 1 bis 6, welches eine weitere Öffnung (122) zur Versorgung mit Schmiermittel umfasst, die sich stromabwärts des dritten Ablasshohlraums (133) befindet.

8. Lager (1) nach einem der Ansprüche 1 bis 7, **dadurch gekennzeichnet, dass** es von zwei Teilen gebildet wird, nämlich einem aktiven bogenförmigen Teil (A) und einem passiven bogenförmigen Teil (B), jeweils die Form eines hohlen Halbzylinders, die dafür ausgebildet sind, aneinander befestigt zu werden, um das Lager (1) zu bilden.

9. Lager (1) nach Anspruch 8, wobei das passive bogenförmige Teil (A) an einem seiner Enden (B1) den ersten und den zweiten Ablasshohlraum (131, 132) und die Öffnung (121) zur Versorgung mit Schmiermittel umfasst, wobei sich die seitlichen Nuten jeweils seitlich vom Ende (B1) bis zum anderen Ende (B2) des passiven bogenförmigen Teils (B) entlang des Innenumfangs dieses passiven bogenförmigen Teils (B) erstrecken.

10. Lager (1) nach einem der Ansprüche 8 oder 9, wobei das aktive bogenförmige Teil (A) an einem seiner Enden (A1), das dazu bestimmt ist, an dem anderen Ende (B2) des passiven bogenförmigen Teils (B) befestigt zu werden, den dritten Ablasshohlraum (133) umfasst.

11. Lager (1) nach einem der Ansprüche 1 bis 10, wobei der dritte Ablasshohlraum (133) an die weitere Öffnung (122) zur Versorgung mit Schmiermittel angrenzt.

12. Lager (1) nach einem der Ansprüche 1 bis 11, wobei die Innenfläche (11) des Lagers (1) zwischen der weiteren Öffnung (122) zur Versorgung mit Schmiermittel und dem erste und zweiten Ablasshohlraum (131, 132) glatt und frei von jedem Hohlraum ist.

## Claims

1. Hydrodynamic bearing (1) having an annular inner surface (11) arranged to surround a rotary shaft in order to support the latter and to guide the rotation of same about the longitudinal axis of rotation thereof in an "upstream" to "downstream" direction of rotation w, said inner surface (11) comprising:
- a lubricant supply orifice (121),
- a first discharge recess (131) and a second discharge recess (132), distributed on either side of said supply orifice (121) across the width of said bearing (1), the first discharge recess (131) opening into a first side groove (151) and the second discharge recess (132) opening into a second side groove (152) such as to guide said lubricant downstream in the direction of said first side groove and said second side groove respectively in order to direct it to the outside of said bearing,
- said first side groove (151) and said second side groove (152) extending along a portion of the circumference of said bearing on the lateral sides of the inner surface of said bearing (1), from said first discharge recess (131) and said second discharge recess (132) respectively, towards a third discharge recess (133) located downstream, in order to direct the lubricant collected by said first and second discharge recesses towards said third discharge recess (133) so as to be discharged to the outside of said bearing (1).

2. Bearing (1) according to claim 1, in which the first side groove (151) and the second side groove (152) each have one or more radial openings (14) that are designed to radially discharge said lubricant from the inside of said first and second side grooves to the outside of said bearing (1).

3. Bearing (1) according to claim 1 or 2, in which the depth of said first discharge recess (131) and of said second discharge recess (132) increases in the downstream direction.

4. Bearing (1) according to claim 3, **characterised in that** said depth increases in the downstream direction, starting upstream level with the inner surface (11) and increasing downstream to a depth equal to or less than the depth of said first and second side grooves (151, 152).

5. Bearing (1) according to one of claims 1 to 4, in which the first discharge recess (131) and the second discharge recess (132) are designed to recover the lubricant conveyed downstream by the rotation of said shaft, and to direct said recovered lubricant laterally and downstream towards the first side groove (151) and the second side groove (152) respectively.

6. Bearing (1) according to one of claims 1 to 5, in which the third discharge recess (133) has one or more discharge channels (142) that are able to radially discharge the lubricant collected by said side grooves (151, 152) to the outside of said bearing.

7. Bearing (1) according to one of claims 1 to 6, including another lubricant supply orifice (122) located downstream of said third discharge recess (133).

8. Bearing (1) according to one of claims 1 to 7, **characterised in that** it is formed by two parts, respectively an active lobe (A) and a passive lobe (B), each having a hollow semi-cylinder shape, that are designed to be attached to one another in order to form said bearing (1).

9. Bearing (1) according to claim 8, in which the passive lobe (A) has, at one of the ends (B1) thereof, said first and second discharge recesses (131, 132) and said lubricant supply orifice (121), said side grooves each extending sideways from said end (B1) to the other end (B2) of said passive lobe (B) around the internal circumference of said passive lobe (B).

10. Bearing (1) according to one of claims 8 or 9, in which the active lobe (A) has said third discharge recess (133) at one of the ends (A1) thereof that is designed to be attached to the other end (B2) of the passive lobe (B).

11. Bearing (1) according to one of claims 1 to 10, in which said third discharge recess (133) adjoins said other lubricant supply orifice (122).

12. Bearing (1) according to one of claims 1 to 11, in which the inner surface (11) of said bearing (1) between said other lubricant supply orifice (122) and said first and second discharge recesses (131, 132) is smooth and free of recesses.
